# EUROPEAN PATENT SPECIFICATION

(11) **EP 3 374 752 B1**
(45) Date of publication and mention of the grant of the patent: **09.08.2023**
(21) Application number: 16797811.3
(22) Date of filing: 10.11.2016
(51) Int. Cl.: G01N 35/00

(54) **CLOSED-SYSTEM PASSIVE MIXING FLOW CELL SYSTEM FOR TISSUE SLIDE STAINING**
GESCHLOSSENES PASSIVES MISCH-DURCHFLUSSZELLENSYSTEM FÜR GEWEBEOBJEKTTRÄGERFÄRBUNG
SYSTÈME DE CELLULE D'ÉCOULEMENT À MÉLANGE PASSIF EN SYSTÈME FERMÉ POUR COLORATION DE LAME DE TISSU

(30) Priority: 13.11.2015 US 201562255112 P
(43) Date of publication of application: 19.09.2018
(73) Proprietor: Ventana Medical Systems, Inc., Tucson, Arizona 85755 (US)
(72) Inventor: BARNETT, Heidi, Tucson, Arizona 85755 (US); COTTER, Jennifer Elizabeth, Tucson, Arizona 85755 (US); GRAVES, Evan, Tucson, Arizona 85755 (US); LU, Li, Tucson, Arizona 85755 (US)
(74) Representative: Altmann Stößel Dick Patentanwälte PartG mbB
(86) International application number: PCT/EP2016/077199
(87) International publication number: WO 2017/081115

(56) References cited:
- US-A1- 2003 087 292
- US-A1- 2004 037 739
- US-A1- 2007 263 485
- US-A1- 2014 055 853
- US-A1- 2015 031 071
- Chia-Yen Lee ET AL: "Microfluidic Mixing: A Review", International Journal of Molecular Sciences, vol. 12, no. 12, 18 May 2011 (2011-05-18), pages 3263-3287, XP055229564, DOI: 10.3390/ijms12053263

## Description

### FIELD OF THE INVENTION

The present invention relates to systems and methods for enhancing reagent flow on slides for tissue slide staining, more particularly to a closed-system flow cell system that allows for enhanced passive mixing of reagents on a slide. The flow cell system may also provide temperature control through preheating reagents.

### BACKGROUND

Automated tissue slide staining machines often utilize methods and systems (e.g., open systems) for depositing amounts of reagents on the top surface of a slide. Typically, molecular diffusion is relied upon to allow the reagents to flow across the slide surface appropriately. A major disadvantage attendant to such "open systems" is that the diffusion process can be slow, which in turn may result in low staining rates of the slide components (e.g., tissue or cells). Also, in such "open systems" the reagents are exposed to air (and possibly high temperatures), resulting in excessive reagent evaporation, which may ultimately result in the drying of the slide components, e.g., tissue. While the reagent(s) could be replenished in order to help prevent slide drying, this increases reagent consumption and thus cost as well as increasing system complexity and run time. In addition, in "open systems", wicking of the reagents, e.g., to a different side of the slide, may have negative effects on the stain quality.

Reaction covers (e.g., cover tiles) may be used atop the slide components (e.g., tissue) to help create an environment less prone to reagent evaporation and to help enhance reagent flow. However, reaction covers may obscure the view of the slide (and tissues and components). US 2015/031071 A1, US 2003/087292 A1 and US 2004/037739 A1 disclose known systems and methods.

The present invention aims to overcome the drawbacks attendant to conventional systems.

### SUMMARY

The present invention is based, in part, on the surprising discovery of a closed-system flow cell system (FCS) that would find use in enhanced passive mixing of reagents on a slide. The flow cell system (FCS) may comprise an encasement that provides a channel or reservoir for reagents to contact the tissue on the slide. At least a portion of the encasement (e.g., a portion within the encasement that contacts the reagents in the channel) comprises a groove pattern, e.g., a herringbone groove pattern. The pattern can be constructed to create a chaotic flow profile, even under laminar flow regime (e.g., the Reynolds number (Re) - a quantity that is used to help predict flow patterns in fluid flow systems - of liquid flow in the system would normally be low, such that chaotic mixing would not occur without the pattern). The closed system of the flow cell system of the present invention helps enhance fluid mixing and prevents reagent evaporation and drying of the tissue. Further, the system will also enable a clear view of the slide (e.g., tissue on the slide), if desired.

In an exemplary embodiment, the present invention features a closed-system flow cell system having the features of independent claim 1. The system may comprise an encasement with an inner cavity adapted to hold a slide and form a channel atop the slide, wherein the encasement comprises a groove pattern within the channel and the groove pattern provides a chaotic advection regime to fluid within the channel. The system comprises an encasement and the encasement comprises: a bottom portion with a slide indentation adapted to accept a slide; and a top portion having a flow surface, the flow surface being the surface facing the slide, wherein a channel indentation is disposed in the flow surface and is sunken in a distance as compared to the flow surface, the channel indentation forms a channel, wherein a groove pattern is disposed on at least a portion of the channel indentation, the groove pattern provides a chaotic advection regime to fluid within the channel. The top portion and the bottom portion are fastened together via fastening systems.

The system further comprises an inlet fluidly connected to the channel and an outlet fluidly connected to the channel. The outlet is be positioned opposite the inlet. The inlet allows reagents to enter the channel and the outlet allows reagents to exit the channel.

The system further may comprise a perimeter groove disposed in the flow surface surrounding the channel indentation. An o-ring may be disposed in the perimeter groove.

The groove pattern may allow for multiple helical flow cycles over a length of the channel. The groove pattern may comprise a staggered herringbone pattern. The groove pattern may be effective for inducing chaotic stirring, e.g., at a Re from 0 to 100.

The encasement can be assembled and disassembled to provide access to the slide.

The channel indentation may have a shape with a middle portion that is generally rectangular and two end portions disposed on opposite sides of the middle portion. The inlet may be fluidly connected to an end portion, and the outlet may be fluidly connected to the other end portion.

The bottom portion may be constructed such that the slide extends at least a distance above a top surface of the bottom portion.

The system is hermetically sealed. The system may allow for the introduction of preheated reagents. The system may be constructed from a translucent or transparent material. The system may be constructed to allow a user is able to visualize fluid mixing in the system. The system may allow for controlling a rate of mixing from a mixing index from 0 to 1. The system may allow for achieving flow speeds from 0 to 200 mm/s. The system may further comprise an image capturing system operatively connected to the system, wherein the image capturing system is adapted to visualize flow in the channel. The image capturing system may comprise a light microscope, or a fluorescent microscope.

The system may comprise an automated staining machine.

The present invention also features a system comprising an automated stainer machine and a closed-system flow cell system according to the present invention.

The present invention also features a method (e.g., an automated method) of introducing a chaotic advection regime to fluid in contact with a slide. The method comprises introducing a reagent into a system of the present invention, wherein the system provides a chaotic advection regime to fluid within the channel in contact with the slide.

The present disclosure also features an automated slide stainer comprising a system according to the present invention, wherein the slide stainer is capable of performing a method of the present invention.

The present disclosure also features an automated slide stainer comprising a processor, and a memory coupled to the processor. The memory stores computer-readable instructions that, when executed by the processor, cause the processor to perform operations to perform methods of the present invention. For example, the operations may comprise instructing the slide stainer to introduce a reagent to the channel of the system (e.g., of the encasement).

Additional advantages and aspects of the present invention are apparent in the following detailed description and claims.

### BRIEF DESCRIPTION OF THE DRAWINGS

FIG. 1 shows a schematic representation of a flow channel with a slanted groove pattern.
FIG. 2 shows a schematic representation of one-and-a-half cycles of the staggered herringbone mixer (SHM).
FIG. 3A shows a perspective view of a flow cell system (FCS) of the present invention.
FIG. 3B shows exploded views of two flow cell systems (FCS) of the present invention. Top: a two-piece system (note the slide and the o-ring are not part of the two pieces); Bottom: a three-piece system (note that the slide is not part of the three pieces).
FIG. 4A shows two top portions of systems of the present invention, each with a staggered herringbone structure.
FIG. 4B shows two top portions of comparative systems, each with a flat surface.
FIG. 5 shows a detailed view of the staggered herringbone structure.
FIG. 6A (top) shows an example of a bottom portion of a system of the present invention and (bottom) an example of a bottom portion of a system of the present invention with a slide in the slide indentation.
FIG. 6B shows an example of a system of the present invention comprising a bottom portion and a channel layer portion.
FIG. 7 shows an in-use view of the setup of a system of the present invention.
FIG. 8 shows mixing efficiency evaluations of different systems with or without the herringbone structure under a single directional flow condition.
FIG. 9A and FIG. 9B show mixing efficiency evaluations of different systems with or without the herringbone structure under a back and forth flow condition at a water flow rate of 3 mL/min.
FIG. 10A and FIG. 10B show mixing efficiency evaluations of different systems with or without the herringbone structure under a back and forth flow condition at a water flow rate of 10 mL/min.
FIG. 11 shows evaluation of the mixing efficiency of different systems with or without the herringbone structure at different DI-water flow rates.
FIG. 12 shows reagent temperature control testing comparing the difference between the setting temperature and the actual on-slide temperature.
FIG. 13 shows an engineering drawing of a top portion of a system of the present invention (with herringbone structure).
FIG. 14 shows an engineering drawing of a top portion of a comparative system (with flat surface).
FIG. 15 shows an engineering drawing of a bottom portion of a system of the present invention.

### DESCRIPTION OF ILLUSTRATIVE EMBODIMENTS

The following is a list of elements corresponding to a particular element referred to herein:
- 100: flow cell system (FCS)
- 101: slide
- 200: encasement
- 210: top portion of encasement
- 212: flow surface of top portion of encasement
- 216: channel indentation in top portion of encasement
- 218: groove pattern
- 219: perimeter groove
- 220: bottom portion of encasement
- 224: slide indentation
- 225: access groove
- 230: channel-layer portion of encasement
- 238: slit
- 240: seal (e.g., o-ring)

Unless otherwise explained, all technical and scientific terms used herein have the same meaning as commonly understood by one of ordinary skill in the art to which a disclosed invention belongs. The singular terms "a," "an," and "the" include plural referents unless context clearly indicates otherwise. Similarly, the word "or" is intended to include "and" unless the context clearly indicates otherwise. "Comprising" means "including." Hence "comprising A or B" means "including A" or "including B" or "including A and B."

All publications, patent applications, patents, and other references mentioned herein are incorporated by reference in their entirety for all purposes. In case of conflict, the present specification, including explanations of terms, will control.

Although methods and materials similar or equivalent to those described herein can be used to practice or test the disclosed technology, suitable methods and materials are described below. The materials, methods, and examples are illustrative only and not intended to be limiting.

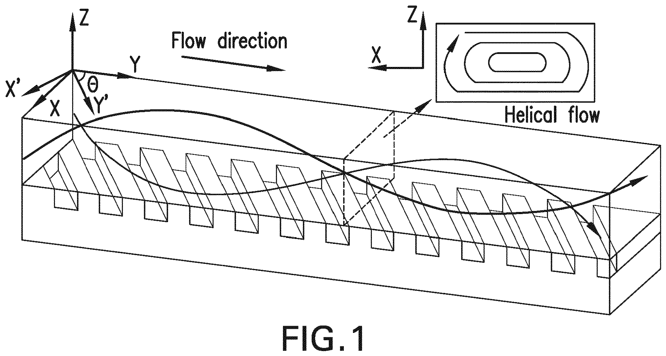

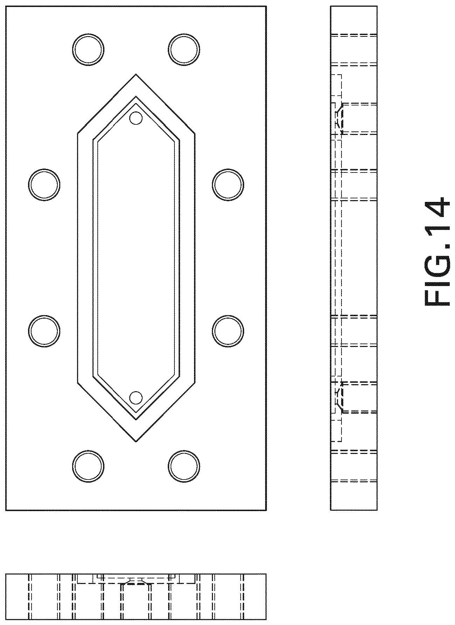

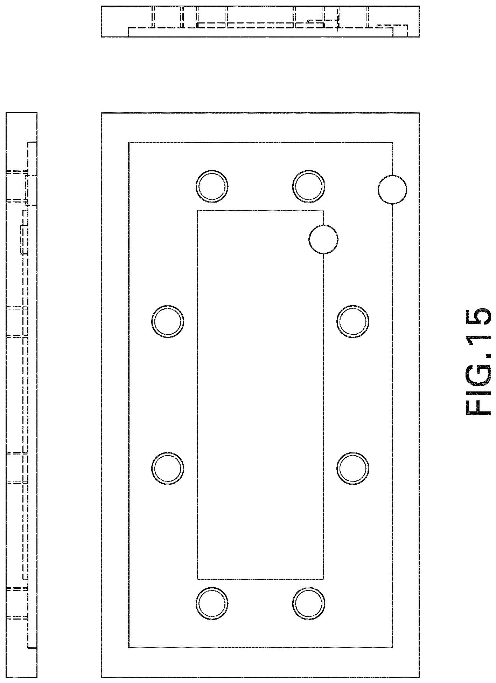

Referring now to FIG. 1-15, the present invention features a flow cell system (FCS) (100) for a slide, for example for staining in an automatic staining machine. The FCS (100) of the present invention helps create a closed system wherein the slide components and reagents used for the slide are free from (or nearly free from) interacting with the outside environment. For example, in some embodiments, the FCS is hermetically sealed.

### Mixing Technologies Comparison

The diminutive scale of flow channels in microfluidic/mini-channel systems increases the surface to volume ratio of the channels, and may therefore be useful for many applications. However, the specific Reynolds number (Re = ρvL/η) of fluid flows in such channels is relatively small. In the system (100) of the present invention, the Reynolds number is of the order of 100 with a characteristic dimension L of 1 mm, a fluid flow rate of 100 mm/s, a fluid density of 1 g/cm³ and a fluid viscosity of 0.001 Ns/m². In such low Reynolds number regimes, turbulent mixing does not occur, and hence diffusive mixing plays an important role (but is an inherently slow process). Increasing the contact area between the fluid species to be mixed is one of the most efficient means of enhancing the diffusive mixing efficiency. In general, mixing techniques can be categorized as passive mixing and active mixing. Active mixers use the disturbance generated by an external field for the mixing process. Thus, active mixers can be categorized by the types of external disturbance effects such as pressure gradients, temperature, electrohydrodynamics, dielectrophoretics, electrokinetics, magnetohydrodynamics and acoustics. With external fields and the corresponding integrated components, the structures of active mixers may be complicated and require complex fabrication processes. Furthermore, external power sources are needed for the operation of active mixers. Thus, the integration of active mixers in a microfluidic/mini-channel system may be both challenging and expensive. In contrast, passive mixers do not require external energy except those for fluid delivery. In addition, passive structures may be robust, stable in operation, and relatively easily integrated in a more complex system. Passive mixers can be further categorized by the arrangement of the mixed phases: parallel lamination, serial lamination, injection, chaotic advection and droplet formation.

Due to the dominating laminar flow, mixing processes in passive mixing techniques may rely on molecular diffusion and chaotic advection. To improve molecular diffusion, increasing contact surface between the different fluid species and decreasing the diffusion path between them may be required. This may be achieved through the use of a large channel dimension; however, this may require increased reagent consumption. In the present invention, a chaotic advection technique is employed to achieve fluid mixing during the staining process.

### Staggered Herringbone Structure

A staggered herringbone structure (SHS) has been demonstrated to be effective in inducing chaotic stirring at low Re (0<Re<100). FIG. 1 shows a slanted groove pattern (for descriptive purposes). A continuous groove (ridge) pattern is created on one side of the channel at an oblique angle, θ, with respect to the long axis (y) of the channel. This means that there is less resistance to flow in the direction parallel to the peaks and valleys of the ridges (along y') than in the orthogonal direction (along x'). As a result of this anisotropy, an axial pressure gradient (along y) generates a mean transverse component in the flow (along x) that originates at the structured surface; the fluid near the top of the channels will recirculate in the opposite direction across the channel (along -x), and an overall helical flow pattern is created along the longitudinal direction (as shown in FIG. 1).

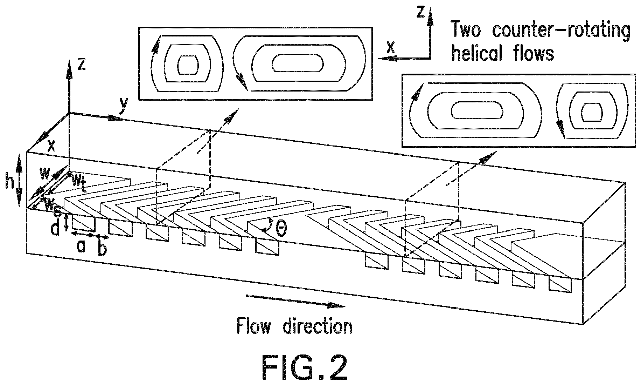

The ability to generate transverse flows in channels makes it possible to design steady chaotic flows for use in micro/mini-fluidic systems. A developed mixer based on patterns of slanted grooves on the floor of the channel is shown in FIG. 2, which is referred to as the staggered herringbone mixer (SHM). The herringbone pattern on the SHM serves to generate two counter-rotating helical flows, such that a chaotic flow profile (with flow advection in both longitudinal and transverse directions) may be created by alternating the asymmetry of the herringbones along the length of the channel.

### Structures for Enhanced Mixing

The present invention features structures for enhanced mixing. For example, the present invention may comprise herringbone structures (e.g., staggered herringbone structure) along the length (or a portion thereof) of the channel. As previously discussed, the staggered herringbone structure helps to create chaotic advection and enhance mixing in a laminar flow regime. The staggered herringbone design may allow for the completion of multiple helical flow cycles. Without wishing to limit the present invention to any theory or mechanism, it is believed that the more cycles it completes, the better mixing will be. However, size of the system (100) may limit the number of cycles that can be achieved (e.g., in some embodiments, to two cycles, to three cycles, etc.).

The staggered herringbone structure can be used to generate fluid mixing in the system of the present invention. In the system of the present invention, groove patterns are designed in the top of the system flow channel (since the slide with tissue is placed at the bottom of the channel). However, whether placing the staggered herringbone structure on the top or the bottom of the channel, two counter-rotating helical flows will generally be created and will generally lead to chaotic advection. The rotating direction of the helical flows will be different, but this will not change the functions of the staggered herringbone structure.

It has been reported that the asymmetry index (wₛ/wₗ), the geometry of the patterns (a/b and θ), the number of herringbones per half cycle (N), and depth ratio of the groove (d/h) control the efficiency of mixing. In particular, helical flow increases significantly as the groove length to ridge length ratio a/b is maximized, and as N increases (Lynn et al., 2007, Lab on a Chip 7.5: 580-587). However, these two parameters counteract each other. Because the total length of the channel of the system is limited, having a large a/b value will result in a small N value. It has been found that the mixing performance is most sensitive to the asymmetry index and the depth ratio of the groove. In addition, when the design parameter wₛ/wₗ is equal to 0.21 and θ is 90°, the SHM will have a maximum mixing efficiency (Yang et al., 2005, Lab on a Chip 5.10: 1140-1147). Other factors to be considered in designing the parameters are channel depth (h) and groove length (a). Since the system may be adapted to provide high flow rate (up to 3 mL/s), the channel depth (h) may not be very large for the purpose of saving reagent consumption. Additionally, the smallest groove length may be constrained due to fabrication limitations, e.g., limitations of CNC machine on plastics. As a result, based on all the above-mentioned considerations, an example of design parameters for a staggered herringbone structure is shown in Table. 1. The present invention is not limited to the design parameters of Table 1.

**TABLE 1: Design Parameters of FCS**

| Parameter | a | b | ws | Wₗ | d | H | θ | N |
|---|---|---|---|---|---|---|---|---|
| Value (mm, dimensional) | 0.75 | 0.25 | 4 | 12 | 0.6 | 0.4 | 90° | 5 |

### Flow Cell System

The flow cell system (FCS) (100) comprises an encasement (200) wherein the encasement is adapted to enclose a slide (101). The flow cell system (100) can be configured to accept an appropriate slide, e.g., a standard slide size, a slide with a tissue cut, etc. In some embodiments, the encasement (200) provides a hermetically sealed environment for the slide (101). In some embodiments, the encasement (200) provides an environment that is at least a partially closed system, e.g., the encasement (200) reduces the amount of exposure the slide has to the outside environment.

The encasement (200) of the flow cell system (100) may be constructed to allow a slide to be inserted, e.g., prior to staining, and removed, e.g., at the end of the staining process. Without wishing to limit the present invention to any theory or mechanism, it may be advantageous to construct an encasement (200) from separated (e.g., two or more) parts. For example, the encasement (200) of the system (100) may then be able to be disassembled and reassembled for slide entry and removal or the structure of the channel (e.g., the area the system creates atop the slide so as to provide a reservoir for reagents) may then be more easily modified. For example, a user may find it easier to change the pattern of the top portion (herringbone, flat surface, etc.) or the height of the channel by switching out top portions. As such, the encasement (200) of the flow cell system (100) of the present invention may be constructed in a single piece or multiple pieces (e.g., two pieces, three pieces, four pieces, more than four pieces, etc.). The present invention is not limited to the configurations described herein.

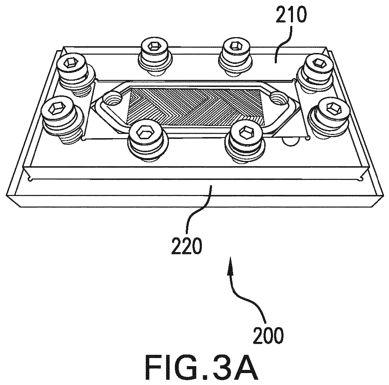

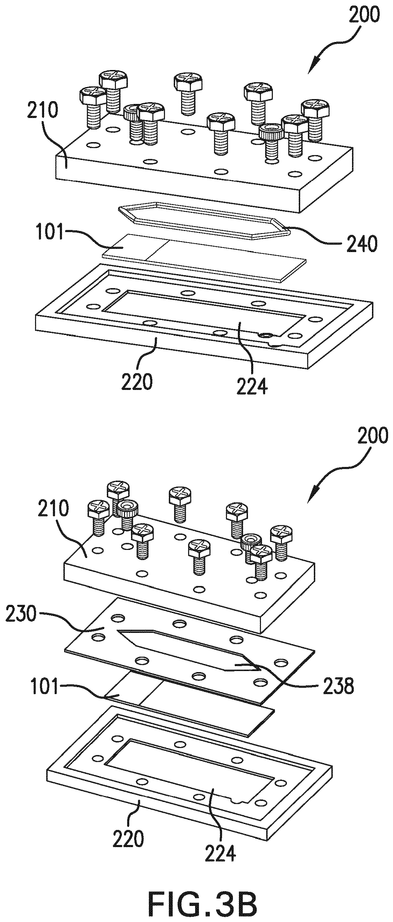

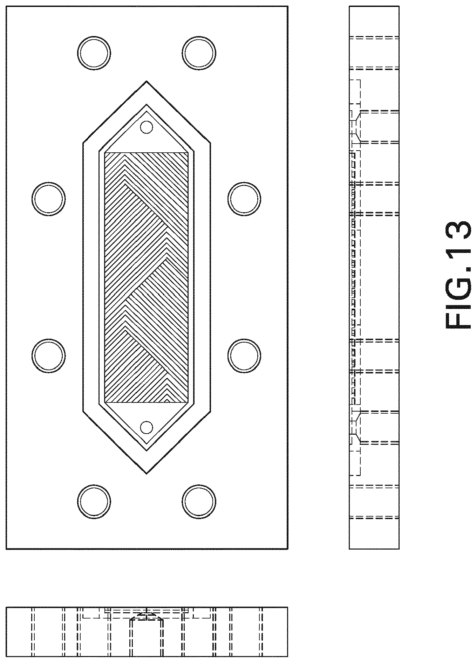

FIG. 3A and FIG. 3B show non-limiting examples of encasements (200). For example, FIG. 3A and FIG. 3B (top) show encasements comprising a top portion (210) and a bottom portion (220). (For reference, FIG. 13, FIG. 14, and FIG. 15 show detailed schematic drawings of top portions (210) and a bottom portion (220) of an encasement (200)). FIG. 3B (bottom) shows an encasement (200) comprising a top portion (210), a bottom portion (220), and a channel-layer portion (230) sandwiched between the top portion (210) and bottom portion (220) (the channel layer portion (230) is adapted to lie atop a portion of the top surface of the slide (101) and atop a portion of the bottom portion (220) of the encasement (200), and the top portion (210) of the encasement (200) lies atop the channel-layer portion (230) of the encasement (200)). The different pieces of the encasement (200) may be fastened together via fastening systems, for example screws in helical screw threaded inserts, etc. Referring to FIG. 3A and FIG. 3B (top), in some embodiments, a seal (240), e.g., an o-ring, is placed between the top portion (210) and the bottom portion (220), for helping to provide a hermetical seal for the system (100).

### Top portion

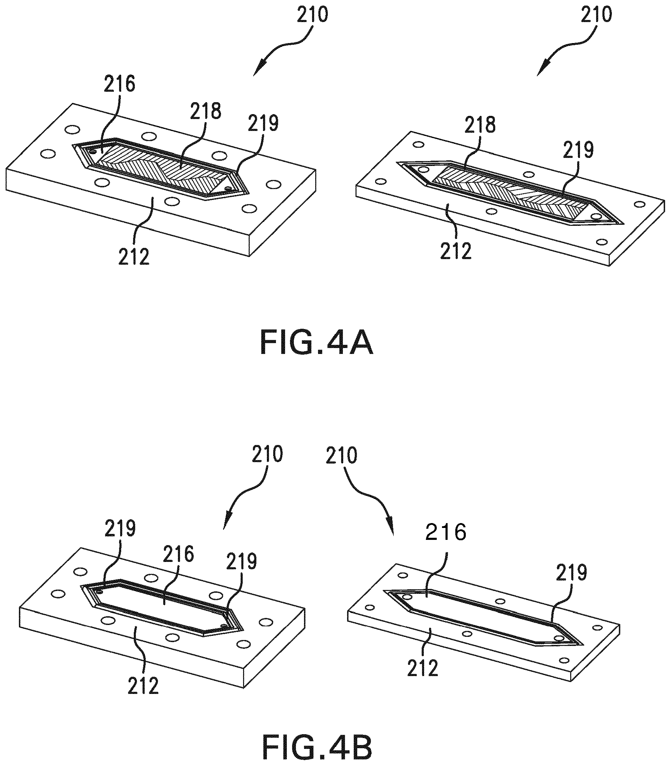

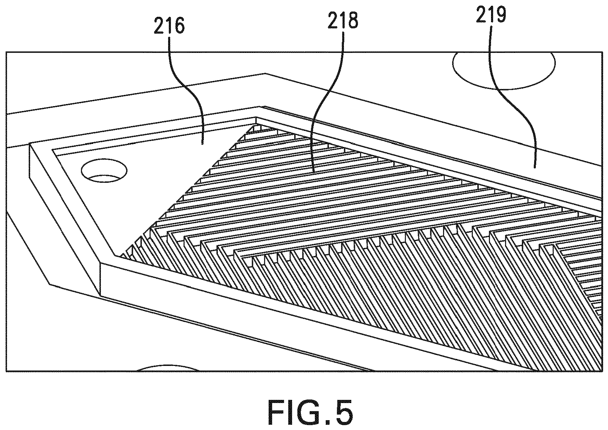

Examples of top portions (210) are shown in FIG. 4A, FIG. 4B, and FIG. 5. The top portion (210) of the encasement (200) has a flow surface (212), the flow surface (212) being the portion or surface of the top portion (210) that faces the slide (101). A channel indentation (216) is disposed in the flow surface (212). For example, the channel indentation (216) is a depression in the surface of the flow surface (212). The channel indentation (216) is sunken in a certain distance as compared to the flow surface (212). In some embodiments, the channel indentation (216) is sunken in uniformly (e.g., the area of the channel indentation (216) is all equally sunken in compared to the flow surface (212)). In some embodiments, the channel indentation (216) not sunken in uniformly, e.g., portions of the channel indentation are less or more sunken in as compared to other portions of the channel indentation, in relation to the flow surface (212).

In some embodiments, the channel indentation (216) is shaped as shown in FIG. 4A, 4B, and FIG. 5, e.g., the channel indentation (216) has a middle section that is generally rectangular and two end sections extending from opposite sides of the middle section. The end sections may optionally provide a space for inlet and outlet holes (e.g., for reagent entry and exit). In some embodiments, the end sections have an angle of about 90 degrees, e.g., as shown in FIG. 4A, FIG. 4B, or FIG. 5. The present invention is not limited in any way to the configurations shown in FIG. 4A, FIG. 4B, and FIG. 5.

The channel indentation (216) (or at least a portion thereof), e.g., a middle section of the channel indentation (216) or a portion thereof, comprises a pattern, e.g., a groove pattern (218). For example, a groove pattern (218) may be machined into at least a portion of the channel indentation (216). In some embodiments, the groove pattern (218) covers the entire surface of the channel indentation (216). In some embodiments, the groove pattern (218) covers a portion of the surface of the channel indentation (216).

The groove pattern (218) may have a variety of different designs. For example, in some embodiments, the groove pattern (218) comprises a staggered herringbone design. FIG. 4A and FIG. 5 show examples of the staggered herringbone design. FIG. 4B shows examples of an alternative design, e.g., a generally flat design. The present invention is not limited to these designs or patterns. For example, the groove pattern (218) may comprise a variation of a staggered herringbone design, a different type of hatching/cross-hatching design, a combination of different designs, etc. In some embodiments, the groove pattern (218) may comprise two or more parallel staggered herringbone structures. Also, other aspects of the groove pattern may be altered, e.g., the depth of the grooves may effectively alter channel height. Various flow profiles can be created based on the design of the groove pattern (218).

In some embodiments, a perimeter groove (219) is disposed in the flow surface (212) of the top portion (210) of the encasement (200) surrounding the channel indentation (216). The perimeter groove (219) may provide space for a sealing component such as an o-ring (240). In some embodiments, the perimeter groove (219) surrounds or encompasses the entire groove pattern (218) or all of the channel indentation (216).

In some embodiments, the perimeter groove (219) is similar in shape to the channel indentation (216). For example, in some embodiments, the perimeter groove (219) is shaped as shown in FIG. 4A and FIG. 4B, e.g., having a middle section that is generally rectangular and two end sections extending from opposite sides of the middle section.

The examples shown herein show holes (e.g., for screws) around the perimeter groove (219). In some embodiments, the holes are positioned a distance (e.g., 3 mm) from the groove (219) so as to help provide a leakfree environment. The present invention is not limited to this configuration.

### Bottom Portion

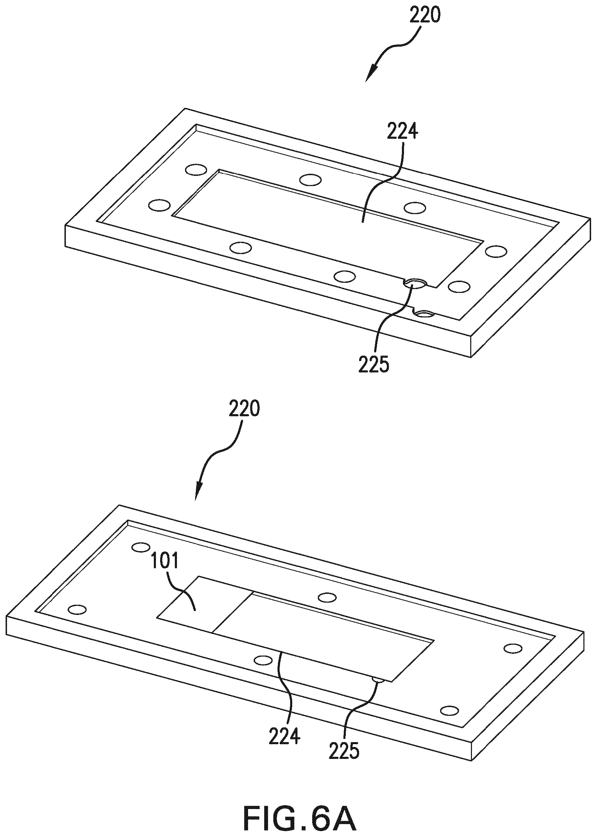

Examples of bottom portions (220) are shown in FIG. 6A. The bottom portion (220) of the encasement (200) comprises a slide indentation (224) adapted to accept a slide (101). The slide indentation (224) is constructed so as to allow the top surface of the slide (101) to extend at least a distance (e.g., 0.1 mm) above the surface of the bottom portion (220).

In some embodiments, an access groove (225) is disposed adjacent to the slide indentation (224). The access groove (225) may help remove the slide (101) from the slide indentation (224). The access groove (225) may be constructed in any appropriate shape and size. For example, in some embodiments, the access groove (225) has a semi-circle shape.

### Channel-layer Portion

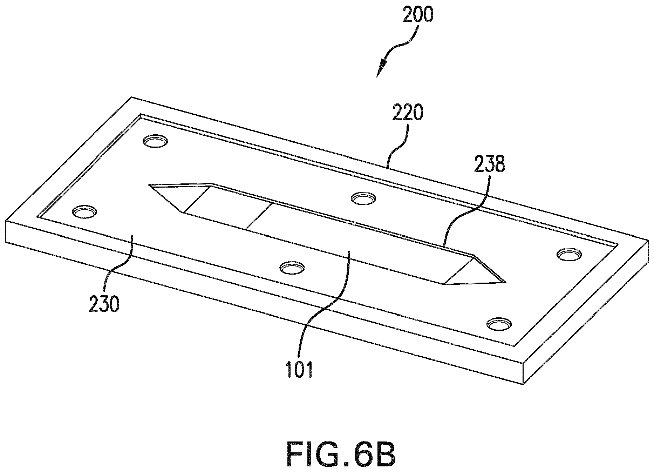

As previously discussed, in some embodiments, the encasement (200) comprises a channel-flow portion (230) adapted to lie atop a portion of the top surface of the slide (101) and atop a portion of the bottom portion (220) of the encasement (200) (see FIG. 6B). A slit (238) disposed in the channel-layer portion (230) creates a channel (e.g., a reservoir area) for holding material, e.g., liquid material, e.g., reagents. The channel-layer portion (230) is designed so that the material (e.g., liquid material) contacts at least a portion of the top surface of the slide (e.g., the tissue to be stained). In some embodiments, the channel-layer portion (230), when atop the slide (101) and/or bottom portion (220) of the encasement (200), creates a sealed well or reservoir wherein liquid does not leak between the slit (238) of the channel-layer portion (230) and the slide (101).

In some embodiments, the channel-layer portion (230) can be removed from the encasement (200) and a different channel-layer portion (230) can be inserted into the encasement. The different channel-layer portions (230) may provide different channel heights or channel configurations. The channel layer portion (230) may be constructed in a variety of thicknesses to create a channel height as desired. For example, in some embodiments, the thickness of the channel layer portion (230) is from about 0.25 to 1.0 mm (e.g., 0.794 mm). The present invention is not limited to these dimensions of the channel layer portion (230). The channel layer portion (230) may be constructed from a variety of materials. For example, in some embodiments, the channel layer portion (230) is constructed from a material comprising polycarbonate. However, the present invention is not limited to this material.

The shape and size of the slit (238) may be constructed as appropriate. In some embodiments, the slit (238) has a shape that resembles the shape created by the channel indentation (216) and/or perimeter groove (219).

### Flow Cell System Features

In some embodiments, during operation, the flow cell system (100) of the present invention is hermetically sealed, for example so as to prevent interactions between the outside environment and the reagents/tissues or cells, prevent reagent concentration change, and/or prevent the tissue from drying out. In some embodiments, the system (100) allows for controlling of the rate of mixing (e.g., mixing index from 0 to 1). In some embodiments, the system (100) allows for mixing in longitudinal and transverse directions. In some embodiments, the system (100) allows for achieving flow speeds from 0 to 200 mm/s. In some embodiments, the system (100) is adapted to help reduce or avoid cross contamination, e.g., reagent to reagent, reagent to system, etc. Without wishing to limit the present invention to any theory or mechanism, it may be possible that the system (100) can help provide a laminar flow profile in the channel in comparison with the chaotic mixing flow profile such that users shall be able to calculate the shear stress at the tissue at different flow rates.

The system (100) of the present invention may comprise at least one or more inlet and one or more outlet for fluid flow. As an example, holes may be inserted through the top portion (210) of the encasement (200). In some embodiments, the segment of the through holes that are closed to the top surface are tapped for assembling flat-bottom fittings, which may firmly connect the flow channel and tubing. An inverted cone type fitting (1/8" OD) can provide operation pressure up to 250 psi. Other types of fittings with advanced features (Type P or Gripper) can offer even higher operation pressure. In some embodiments, the system is configured to run different reagents through it. For example, the system may be configured to have multiple inlets where each inlet is for conducting a specific reagent.

In some embodiments, the fluid flow speed in the channel is adjustable, e.g., from 0 to 200 mm/s. As an example, if the channel cross-sectional area is 13 mm², the maximum flow rate will be about 2.6 mL/s. This is a very high flow rate for reagents that are expensive, like antibody solution. In some embodiments, reagents may be collected from the outlet and infused back to the channel. This may be performed in a continuous way, e.g., a push-pull continuous cycle syringe pump may be used to support infusion and withdrawal simultaneously, e.g., at flow rates from 0 to 3 mL/s and with selectable target volumes.

The system of the present invention may further comprise tubing. In some embodiments, the tubing is constructed from material that has low compliance, e.g., to achieve high connection strength and quick response to flow rate change, for example PTFE, THV, etc. The fluidic resistance in the tubing may be lowered as much as possible (e.g., by using tubing with larger ID) while the dead volume in tubing may be kept as low as possible (e.g., by using tubing with smaller ID). To solve this conflict, tubing with moderate ID may be used.

The system (100) of the present invention is adapted to help create a closed system for tissue slide staining. In some embodiments, the system (100) may also help provide temperature control over reagents. For example, the system may be constructed from material that helps maintain appropriate temperatures for staining. In some embodiments, the reagent temperature at the tissue may be adjustable, e.g., between 25~45°C. In some embodiments, the reagent temperature may be maintained at a temperature, e.g., with an accuracy of ± 2°C. This may be achieved, for example, by configuring the system (100) to allow for the introduction of preheated reagents (e.g., heating the reagents prior to entering the channel of the system (100) of the present invention). In some embodiments, syringes are wrapped with heating pads and controlled using a thermo-kinetic heater control unit to heat up the reagents in the syringes quickly, e.g., between 25~45°C.

The system (100) of the present invention may be constructed from material that allows for observation of the tissue, e.g., material that is transparent or translucent. In some embodiments, the system (100) is constructed such that a user is able to visualize fluid mixing in the system (100), e.g., from a top view, e.g., by means of microscopy or camera imaging. For example, some users may need to observe fluid flow in the system's channel during the staining process. In some embodiments, the image capturing system comprises a regular light microscope or an inverted microscope. In some embodiments, in order to visualize fluid mixing and assess the degree of mixing, tracers (e.g. color dyes or fluorescent particles) may be added to the reagent to indicate the streamlines of flows. In some embodiments, fluorescent particles are used in reagents and images of fluid flow are taken using a fluorescence microscope. Captured images may be analyzed to determine the degree of fluid mixing. In some embodiments, the system further comprises the image capturing system.

### EXAMPLE 1

Example 1 describes materials and systems used for constructing a FCS of the present invention. The present invention is not limited to the materials and systems in Example 1.

In order to visualize fluid flows inside the channel, the system (100) may be made of transparent materials. One way to fabricate the system (100) is to use a 3D printer to build the parts. Another way to fabricate the system (100) is using CNC machining. An example of a 3D printer is a Stratasys Fortus 400mc, which works with engineering thermoplastics, like Acetal, ABS, ULTEM 9850, etc. However, these materials are non-transparent (note that ULTEM 1000, a transparent amber brown material, is not compatible with this printer). Polycarbonate (PC) is a commonly used and well-understood engineering thermoplastic material. Its inherent strength, excellent optical clarity, high heat distortion temperature, and dimensional stability make it an option for demanding, critical healthcare applications. Accordingly, polycarbonate may be chosen as the material to build the system (100). The following list shows the materials and software used for system (100) design, fabrication, and analysis.

**TABLE 2: Materials and software for FCS design, fabrication, and analysis**

| **Name** | **Quantity** | **Supplier/Brand** | **Catalog/Model** | **Purpose** |
|---|---|---|---|---|
| **Material and Accessory** | | | | |
| Push/Pull Syringe Pump | 1 | VWR | KDS Legato 270 | Reagent infusion/withdrawal |
| Thermo-Kinetic Heater Kit | 1 | New Era Pump Systems | HEATER-KIT-1LG | Reagent temperature control |
| Secondary Heating Pad | 1 | New Era Pump Systems | HEATER-PAD2-1LG | Reagent temperature control |
| Plastic Syringe (140 mL, Luer-lock) | 2 | COVIDIEN | 8881114030 | Reagent storage |
| Plastic Syringe (60 mL, Luer-lock) | 2 | Becton Dickinson | 301035 | Reagent storage |
| Plastic Syringe (10 mL, Luer-lock) | 2 | Becton Dickinson | 301029 | Reagent storage |
| Polycarbonate Sheet 1/32" | 1 | ePlastics | PCCLR0.030AM24X48 | FCD fabrication |
| Polycarbonate Sheet 3/8" | 1 | McMaster-Carr | 8707K174 | FCD fabrication |
| O-ring (square profile) | 1 | McMaster-Carr | 4061T18 | Device sealing |
| Stainless Steel Screw Socket Head Cap M6-18 | 8 | McMaster-Carr | 92855A617 | Device sealing |
| Screw-lock Helical Insert M6x1 | 8 | McMaster-Carr | 90296A306 | Device sealing |
| THV Tubing (1/8" OD, 1/16" ID) | 5 ft | Zeus | THV220-003 | Reagent transport |
| Syringe-tubing Barb Adapter (Female Luer to 1/16" ID) | 2 | Cole-parmer | EW-45508-00 | Reagent transport |
| Tubing-Device Fitting (M6 omni-Lok for 1/8" OD tubing) | 2 | Dibafit | 008NF32-YC6B | Reagent transport |
| Omni-Lok Ferrule Type P PTFE 1/8"" | 2 | Dibafit | 008FT32 | Reagent transport |

| **Equipment and Software** | | | | |
|---|---|---|---|---|
| CMOS camera | - | Edmund Optics | EO-0413C | Image capture |
| SolidWorks | - | Dassault Systémes | v2010 | Prototype design |
| Imagel | - | NIH | v1.49 | Image processing |
| MATLAB | - | MathWorks | v2012 | Image analysis |

### EXAMPLE 2

Example 2 describes a flow cell test-bed setup for a system of the present invention. The present invention is not limited to the materials, configurations, and systems in Example 2.

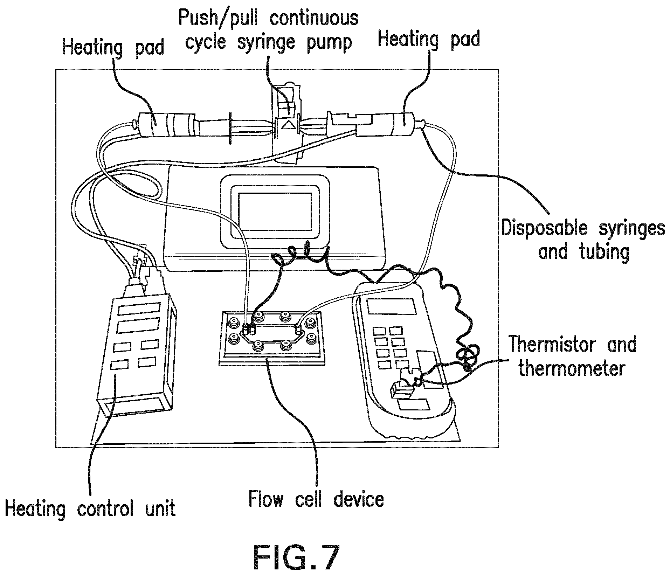

FIG. 7 shows a flow cell test-bed setup. Two disposable syringes are placed on a push/pull continuous cycle syringe pump and are connected with the system through tubing and tubing fittings. This creates a closed fluidic circuit that allows for the back and forth transport of fluid in the system's channel. Two heating pads are wrapped around the two syringes respectively and are connect to a heating control unit. The maximum temperature that the heating control unit can achieve is 185 °C. In the experiment of temperature control testing, a thermistor is installed in the channel through a fluidic port. A hand-held thermometer is connected to the thermistor and used to measure the on-slide reagent temperature.

Test 1: The goal of the test was to check if the system can prevent reagent leaking and air trapping throughout the entire flow rate range, from 0 to at least 2.6 mL/s (equal to 200 mm/s). The steps were as follows: The system was set up (system, a push/pull syringe pump, two syringes (140 mL for each), tubing, and tubing fittings). DI-water was applied to the system, and it was ensured that there were no visible air bubbles trapped in the system. Maximum required flow rate (3 mL/s) was applied to the system for 5 min. (Note: If there is no additional air bubble formed and no leaking occurs during the test, it means the goal is met). The test was repeated for other reagents with different viscosities, including proK. The output was a pass/fail evaluation.

Test 2: The goal of this test was to visualize and assess the degree of mixing in the channel. Two systems were tested and compared: (a) one with the herringbone structure, and (b) one without the herringbone structure (flat surface). The Test A steps were as follows: Four different gel color dyes (10 µL for each) were put at glass slide surface (towards the leading edge of the herringbone structure). The reagent was prepared: water with 0.4% detergent (e.g., works as a surfactant to lower the surface energy of water). The system was set up, including the system with the herringbone structure, a push/pull syringe pump, a 140 mL syringe with the reagent, tubing, and tubing fittings. The flow rate was set to 0.5 mL/min and a run was started. The reagent was collected from the outlet using a beaker. A CMOS camera was used to record videos at for 1 min from the top view. The flow rate was gradually increased to 5, 10, 20, 60, 140, and 180 mL/min. Steps were repeated for the system without the herringbone structure. The Test B steps were as follows: Four different gel color dyes (10 µL for each) were put at glass slide surface (towards both the leading and trailing edges of the herringbone structure). The reagent was prepared: water with 0.4% detergent (e.g., works as a surfactant to lower the surface energy of water). The system was set up, including the system with the herringbone structure, a push/pull syringe pump, two 140 mL syringes with the reagent, tubing, and tubing fittings. The flow rate was set to 3 mL/min and a run was started to transport 1 mL of reagent back and forth in the channel. A CMOS camera was used to record videos at for 10 min from the top view. The steps were repeated at a flow rate of 10 mL/min. The steps were repeated for the system without the herringbone structure. Image analysis: Images were selected from the recorded videos at an interval of 30s from the initial state to the complete mixing state. A fixed region of interest across the channel on each image was selected. The mean pixel intensity (i.e. gray value, Iᵢ) was measured, as well as the standard deviation of each image (I_{σ}). The maximum mean pixel intensity was found and was set as the Iₘₐₓ. Iᵢ and I_{σ} were normalized to Iₘₐₓ, and the data was plotted. The normalized Iᵢ and I_{σ} of each case for (a) and (b) were compared. The output was the plot of the normalized mean pixel intensity and standard deviation of each case.

Test 3: The goal of this test was to characterize the relationship between the reagent volume used in the system and the usable maximum flow rate. The steps were as follows: The achievable maximum flow rate was calculated for each syringe including, 10 mL, 30mL, 60 mL, and 140 mL. The minimum required reagent volume was calculated for each syringe to perform a single run. The relationship was built between the steps. The output was a chart showing this relationship.

Test 4: The goal of this test was to evaluate if the system design can avoid cross contamination. The design allowed users to disassemble the system. The design allowed users to clean the system surface using ethanol wipes or general detergent. The output was a pass/fail evaluation.

Test 5: The goal of this test was to check if the heating system could meet the requirement. The steps were as follows: A thermistor was installed in channel through a fluidic port to assess on-slide temperature. The heating pads were wrapped around two 60 mL syringes and the reagent was heated up using a syringe heating unit. The pump was working and was providing a flow rate of 30 mL/min. (Note: If the target temperature is achieved and maintained with an accuracy of ± 2 °C after 10 min, then the goal is met. If it is not met, then extend the test time to 15 min and recheck it.) The output was a pass/fail evaluation.

The mixing efficiencies of different flow cell designs were evaluated first by conducting a single directional flow experiment. There were three groups of testing in this experiment (1) a system with a flat surface top part, (2) a system with a herringbone structure top part, and (3) the same system as that in group (2) but with a reversed flow direction. Four gel color dyes (i.e. blue, yellow, green, and red) were placed close to the inlet of each system. Each dye was about 10 µL in volume, and was dispensed on the slide using a pipette. The distance between each gel dye is about 1 mm. The flow rate of DI-water (with 0.4% detergent) was increased gradually from 0-10 mL/min. Bright field images of the flow for each group were captured using a CMOS camera.

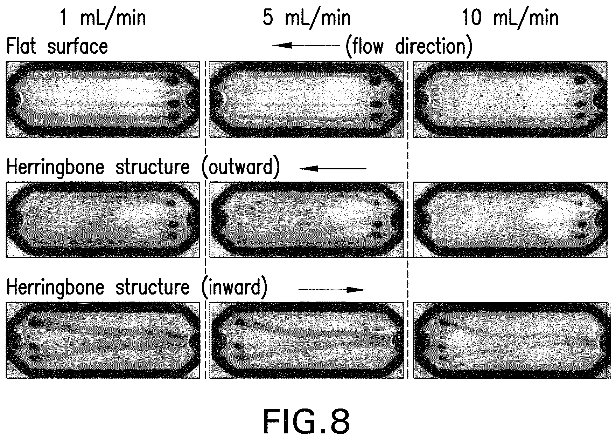

The results are shown in FIG. 8. In group (1), the streaklines of the dyes are kept fairly straight. This represents a typical laminar flow profile, that is, with no fluid advection and limited molecular diffusion. However, in both group (2) and (3), some degree of mixing was observed. Especially in group (2), fluids flow outward first and recirculate back across the channel after hitting the channel side wall. This helical flow pattern ensured the mixing of all the four dyes at the entire downstream region of the channel. In group (3), due to the reversed direction of herringbone structure, fluids flow inward first and focus to the center where diffusional mixing occurs. It is worth noting that as flow rate increased, the width of the streaklines of all cases become narrower. This is because that there is less time for the dye molecules to diffuse as they travel across the channel at a faster speed. The experimental results of the three groups together qualitatively demonstrated the effectiveness of the herringbone structure in enhancing the fluid mixing rate in a single directional flow fashion.

A back and forth flow experiment was conducted to test the mixing efficiency of different systems in real working environment. In this experiment, four gel color dyes (10 µL for each) were placed at both the inlet and outlet of the system with a same order. 1 mL of DI-water (with 0.4% detergent) was transported back and forth across the system channel using a push/pull continuous cycle mode of the syringe pump. Two sets of testing were performed at fluid flow rate of 3 mL/min and 10 mL/min, respectively. Bright field images of the flow for each set were captured using a CMOS camera.

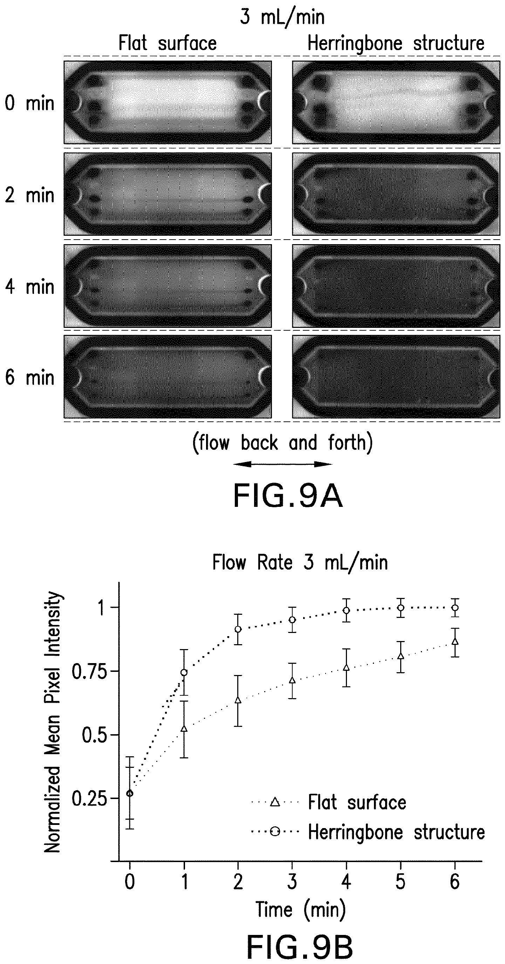

FIG. 9A shows the image comparison between the flat surface system and the herringbone structure system at fluid flow rate of 3 mL/min. In order to quantitatively assess the mixing efficiency of each case, we employed an image analysis method using ImageJ. A region of interest (ROI) was chosen on the image, and was kept the same for each image. The mean pixel intensity (i.e. gray value) and its standard deviation of the ROI of each image were measured using ImageJ. Then the values were normalized against the maximum value (i.e. when the dyes were completely mixed, the mean pixel value would reach its maximum). The results are plotted in FIG. 9B where the standard deviation represents the heterogeneity of the image intensity. The system with a herringbone structure reaches complete mixing after about 4 min while the system with a flat surface only reaches 75% of mixing. This confirms the effectiveness of the herringbone structure in enhancing fluid mixing in the system at fluid flow rate of 3 mL/min.

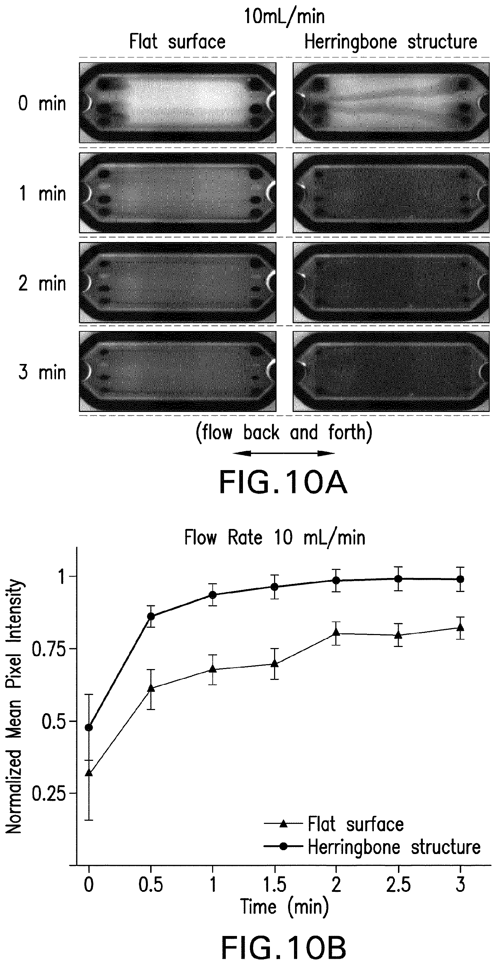

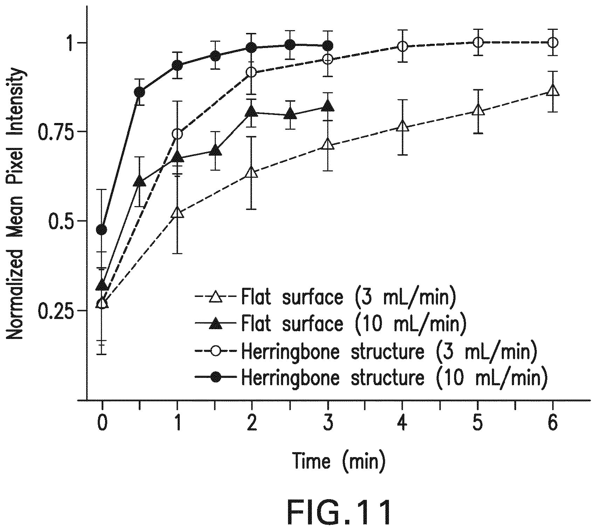

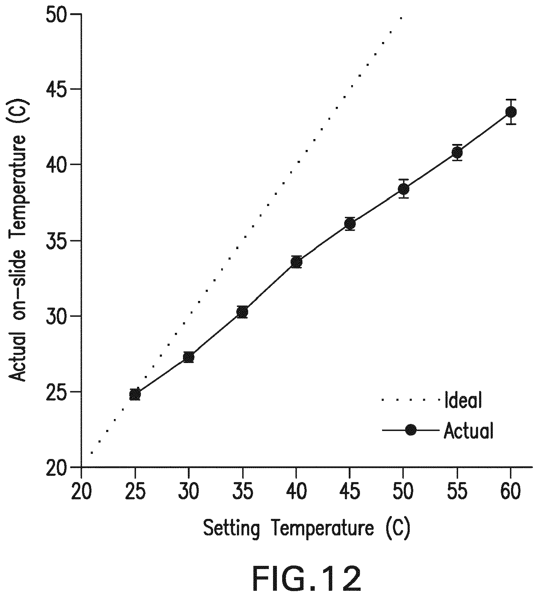

Similarly, this back and forth experiment was repeated at a higher flow rate, 10 mL/min. The image comparison was shown in FIG. 10A. Quantitative measurements on mean pixel intensity were plotted in FIG. 10B. The two curves show a similar trend as that in FIG. 9B, demonstrating the higher mixing rate induced by the herringbone system compared to the flat surface system. The curves in the two cases were then plotted into one figure as shown in FIG. 11. By comparing the flat surface curves with herringbone surface curves, we can confirm the conclusion that a system with the herringbone structure will have a higher mixing efficiency than that of a system with a flat surface channel. In addition, by comparing the solid curves with the dotted curves, we are able to conclude that higher fluid flow rates in the channel will result in a higher mixing efficiency for both the herringbone system and the flat surface system. For example, at flow rate of 10 mL/min, the system with a herringbone structure reaches complete mixing after about 1.5 min, while the same system will take 4 min to complete mixing at flow rate of 3 mL/min. It should be noted that the tubing also helps fluid mixing in this back and forth flow case. If we transport a certain volume (larger than 0.78 mL) of reagent back and forth in the channel, it is inevitable to transport the fluid to the tubing, where a large amount of mixing could happen. Then the solution is transported back to the channel where the herringbone plays a role. This means having the tubing included here would be beneficial to enhance fluid mixing efficiency. The reagent temperature control setup is shown in FIG. 7. The heating control unit sets the temperature on the two heating pads, which are wrapped around the syringes and transfer heat to the reagent. The evaluation was performed by setting a temperature on the heating control unit and then measuring the actual on-slide reagent temperature when the value did not change anymore (i.e. when the balance between heat generation and heat dissipation had been formed; it was measured to be after about 10 min that the on-slide reagent temperature had come to a plateau). The result shows in FIG. 12. We observe a gap between the setting temperature and the actual on-slide reagent temperature. This is likely due to heat dissipation during the fluid transport. Two methods could be taken to compensate this heat dissipation. First, we can add a heating plate underneath the system and heat the reagent throughout the whole staining process. The other method is to preheat the reagents to/above the target temperature before start. Both of the two methods could reduce the time for the reagent temperature to reach its target.

The disclosures of the following documents are cited for reference: Nguyen et al., 2005, Journal of Micromechanics and Microengineering 15.2: R1; Stroock et al., 2004, Philosophical Transactions of the Royal Society of London A: Mathematical, Physical and Engineering Sciences 362.1818: 971-986; Stroock et al., 2002, Science 295.5555: 647-651; Lynn et al., 2007, Lab on a Chip 7.5: 580-587; Yang et al., 2005, Lab on a Chip 5.10: 1140-1147, Lee et al., 2011, International Journal of Molecular Sciences 12.5: 3263-3287.

Various modifications of the invention, in addition to those described herein, will be apparent to those skilled in the art from the foregoing description. For example the disclosed system can not only be used to treat a tissue sample disposed on a microscope slide but to any sample disposed on a substrate. Non-limiting, further examples include a system for applying a reagent to a tissue, nucleic acid or protein array, or a system to treat a biological sample dispose on a MALDI-TOF target. Such modifications are also intended to fall within the scope of the appended claims.

## Claims

1. A closed-system flow cell system (100) comprising an encasement (200), the encasement (200) comprises:
a. a bottom portion (220), the bottom portion comprises a slide indentation (224) adapted to accept a slide (101);
b. a top portion (210) having a flow surface (212), the flow surface (212) being a surface for facing the slide (101), wherein a channel indentation 216 is disposed in the flow surface (212) and sunken in a distance as compared to the flow surface (212), the channel indentation (216) forms a channel, wherein a groove pattern (218) is disposed on at least a portion of the channel indentation (216), wherein the groove pattern (218) provides a chaotic advection regime to fluid within the channel, wherein the top portion (210) and the bottom portion (220) are fastened together via fastening systems,
wherein the system further comprises an inlet fluidly connected to the channel and an outlet fluidly connected to the channel, the outlet is positioned opposite the inlet, the inlet allows reagents to enter the channel and the outlet allows reagents to exit the channel, wherein the system (100) is hermetically sealed.

2. The system (100) of claim 1 further comprising a perimeter groove (219) disposed in the flow surface (212) surrounding the channel indentation (216).

3. The system (100) of claim 2, wherein an o-ring (240) is disposed in the perimeter groove (219).

4. The system (100) of any of claims 1-3, wherein the groove pattern (218) allows for multiple helical flow cycles over a length of the channel.

5. The system (100) of any of claims 1-4, wherein the groove pattern (218) comprises a staggered herringbone pattern.

6. The system (100) of any of claim 1-5, wherein the groove pattern (218) is effective for inducing chaotic stirring at a Re from 0 to 100.

7. The system (100) of any of claims 1-6, wherein the groove pattern (218) is effective for inducing chaotic stirring at a Re from 10 to 90.

8. The system (100) of any of claims 1-7, wherein the groove pattern (218) is effective for inducing chaotic stirring at a Re from 20 to 80.

9. The system (100) of any of claims 1-8, wherein the system (100) is constructed from a translucent or transparent material.

10. The system (100) of any of claims 1-9, wherein the system (100) is constructed to allow a user is able to visualize fluid mixing in the system (100).

11. The system (100) of any of claims 1-10 further comprising an image capturing system operatively connected to the system (100), wherein the image capturing system is adapted to visualize flow in the channel.

12. The system (100) of claim 11, wherein the image capturing system comprises a light microscope, and inverted microscope, or a fluorescent microscope.

13. A system comprising: an automated stainer machine and a closed-system flow cell system (100) according to any of claims 1-12.

14. A method of introducing a chaotic advection regime to fluid in contact with a slide, said method comprising introducing a reagent into a system (100) according to any of claims 1-13, wherein the system (100) provides a chaotic advection regime to fluid within the channel in contact with the slide (101).

15. The method of claim 14, wherein the method is automated.

## Patentansprüche

1. Durchflusszellensystem (100) mit einem geschlossenen System, umfassend eine Umhüllung (200), wobei die Umhüllung (200) Folgendes umfasst:
a. einen unteren Teil (220), wobei der untere Teil eine Schiebevertiefung (224) aufweist, die zur Aufnahme eines Schiebers (101) angepasst ist;
b. einen oberen Abschnitt (210) mit einer Strömungsfläche (212), wobei die Strömungsfläche (212) eine Fläche ist, die dem Schieber (101) zugewandt ist, wobei eine Kanalvertiefung (216) in der Strömungsfläche (212) angeordnet und verglichen mit der Strömungsfläche (212) in einem Abstand abgesenkt ist, wobei die Kanalvertiefung (216) einen Kanal bildet, wobei ein Rillenmuster (218) auf mindestens einem Teil der Kanalvertiefung (216) angeordnet ist, wobei das Rillenmuster (218) ein chaotisches Advektionsregime für Flüssigkeit innerhalb des Kanals bereitstellt, wobei der obere Abschnitt (210) und der untere Abschnitt (220) über Befestigungssysteme aneinander befestigt sind,
wobei das System ferner einen Einlass, der strömungstechnisch mit dem Kanal verbunden ist, und einen Auslass, der strömungstechnisch mit dem Kanal verbunden ist, umfasst, wobei sich der Auslass gegenüber dem Einlass befindet, wobei der Einlass den Eintritt von Reagenzien in den Kanal und der Auslass den Austritt von Reagenzien aus dem Kanal ermöglicht, wobei das System (100) hermetisch verschlossen ist.

2. System (100) gemäß Anspruch 1, ferner umfassend eine Umfangsrille (219), die in der Strömungsfläche (212) angeordnet ist und die Kanalvertiefung (216) umgibt.

3. System (100) gemäß Anspruch 2, wobei ein O-Ring (240) in der Umfangsrille (219) angeordnet ist.

4. System (100) gemäß einem der Ansprüche 1-3, wobei das Rillenmuster (218) mehrere schraubenförmige Strömungszyklen über eine Länge des Kanals ermöglicht.

5. System (100) gemäß einem der Ansprüche 1-4, wobei das Rillenmuster (218) ein versetztes Fischgrätenmuster umfasst.

6. System (100) gemäß einem der Ansprüche 1-5, wobei das Rillenmuster (218) wirksam ist, um chaotisches Rühren bei einem Re von 0 bis 100 zu induzieren.

7. System (100) gemäß einem der Ansprüche 1-6, wobei das Rillenmuster (218) wirksam ist, um chaotisches Rühren bei einem Re von 10 bis 90 zu induzieren.

8. System (100) gemäß einem der Ansprüche 1-7, wobei das Rillenmuster (218) wirksam ist, um chaotisches Rühren bei einem Re von 20 bis 80 zu induzieren.

9. System (100) gemäß einem der Ansprüche 1-8, wobei das System (100) aus einem lichtdurchlässigen oder transparenten Material konstruiert ist.

10. System (100) gemäß einem der Ansprüche 1-9, wobei das System (100) so konstruiert ist, dass ein Benutzer in der Lage ist, das Mischen von Flüssigkeiten in dem System (100) zu visualisieren.

11. System (100) gemäß einem der Ansprüche 1-10, ferner umfassend ein Bildaufnahmesystem, das mit dem System (100) wirkverbunden ist, wobei das Bildaufnahmesystem dazu ausgelegt ist, die Strömung in dem Kanal zu visualisieren.

12. System (100) gemäß Anspruch 11, wobei das Bildaufnahmesystem ein Lichtmikroskop, und inverses Mikroskop oder ein Fluoreszenzmikroskop umfasst.

13. System, umfassend: eine automatisierte Färbemaschine und ein Durchflusszellensystem (100) mit geschlossenem System gemäß einem der Ansprüche 1-12.

14. Verfahren zum Einführen eines chaotischen Advektionsregimes in eine mit einem Objektträger in Kontakt stehende Flüssigkeit, wobei das Verfahren das Einführen eines Reagens in ein System (100) gemäß einem der Ansprüche 1-13 umfasst, wobei das System (100) ein chaotisches Advektionsregime für eine Flüssigkeit innerhalb des Kanals in Kontakt mit dem Objektträger (101) bereitstellt.

15. Verfahren gemäß Anspruch 14, wobei das Verfahren automatisiert ist.

## Revendications

1. Système de cellule d'écoulement en système fermé (100) comprenant un boîtier (2000), le boîtier (200) comprenant :
a. une partie inférieure (220), la partie inférieure comprenant un renfoncement pour lame (224) conçu pour recevoir une lame (101) ;
b. une partie supérieure (210) ayant une surface d'écoulement (212), la surface d'écoulement (212) étant une surface faisant face à la lame (101), dans lequel un renfoncement pour canal (216) est disposé dans la surface d'écoulement (21)
et, immergé à une distance par comparaison avec la surface d'écoulement (212), le renfoncement pour canal (216) forme un canal, dans lequel un motif de rainure (218) est disposé sur au moins une partie du renfoncement pour canal (216), dans lequel le motif de rainure (218) fournit un régime d'advection chaotique au fluide à l'intérieur du canal,
dans lequel la partie supérieure (210) et la partie inférieure (220) sont fixées ensemble par le biais de systèmes de fixation,
dans lequel le système comprend en outre une entrée en liaison hydraulique avec le canal et une sortie en liaison hydraulique avec le canal, la sortie étant positionnée à l'opposé de l'entrée, l'entrée permettant à des réactifs d'entrer dans le canal et la sortie permettant aux réactifs de sortir du canal, dans lequel le système est scellé hermétiquement.

2. Système (100) selon la revendication 1, comprenant en outre une rainure périphérique (219) disposée dans la surface d'écoulement (212) entourant le renfoncement pour canal (216).

3. Système (100) selon la revendication 2, dans lequel un joint torique (240) est disposé dans la rainure périphérique (219).

4. Système (100) selon l'une quelconque des revendications 1 à 3, dans lequel le motif de rainure (218) permet de multiples cycles d'écoulement en hélice sur une longueur du canal.

5. Système (100) selon l'une quelconque des revendications 1 à 4, dans lequel le motif de rainure (218) comprend un motif à chevrons en quinconce.

6. Système (100) selon l'une quelconque des revendications 1 à 5, dans lequel le motif de rainure (218) agit pour induire une agitation chaotique à un Re compris entre 0 et 100.

7. Système (100) selon l'une quelconque des revendications 1 à 6, dans lequel le motif de rainure (218) agit pour induire une agitation chaotique à un Re compris entre 10 et 90.

8. Système (100) selon l'une quelconque des revendications 1 à 7, dans lequel le motif de rainure (218) agit pour induire une agitation chaotique à un Re compris entre 20 et 80.

9. Système (100) selon l'une quelconque des revendications 1 à 8, dans lequel le système (100) est construit à partir d'un matériau translucide ou transparent.

10. Système (100) selon l'une quelconque des revendications 1 à 9, dans lequel le système (100) est construit pour permettre à un utilisateur de visualiser le mélange de fluide dans le système (100).

11. Système (100) selon l'une quelconque des revendications 1 à 10, comprenant en outre un système de capture d'image connecté en fonctionnement au système (100), dans lequel le système de capture d'image est conçu pour visualiser l'écoulement dans le canal.

12. Système (100) selon la revendication 11, dans lequel le système de capture d'image comprend un microscope optique, un microscope inversé ou un microscope à fluorescence.

13. Système comprenant : une machine de coloration automatique et un système de cellule d'écoulement en système fermé (100) selon l'une quelconque des revendications 1 à 12.

14. Procédé d'introduction d'un régime d'advection chaotique dans un fluide en contact avec une lame, ledit procédé comprenant l'introduction d'un réactif dans un système (100) selon l'une quelconque des revendications 1 à 13, dans lequel le système (100) fournit un régime d'advection chaotique au fluide à l'intérieur du canal en contact avec la lame (101).

15. Procédé selon la revendication 14, dans lequel le procédé est automatique.
